(19) Europäisches Patentamt
European Patent Office
Office européen des brevets

(11) Publication number: **0 087 526**
**A1**

(12) **EUROPEAN PATENT APPLICATION**

(21) Application number: 82300985.7

(22) Date of filing: 25.02.82

(51) Int. Cl.³: C 08 C 19/36
C 08 C 19/28

(43) Date of publication of application:
07.09.83 Bulletin 83/36

(84) Designated Contracting States:
BE DE FR GB IT NL SE

(71) Applicant: Revertex Chemicals Limited
Temple Fields
Harlow Essex, CM20 2AH(GB)

(72) Inventor: Burrage, Martin Eric
134 Lemsford Lane Welwyn Garden City
Hertfordshire, AL8 67P(GB)

(74) Representative: Thiemann, Peter Albert William et al,
LLOYD WISE, TREGEAR & CO. Norman House
105-109Strand
London, WC2R 0AE(GB)

# (54) Polymeric material containing randomly distributed hydroxyl groups from polymers and copolymers of conjugated dienes, process for the preparation thereof, and use thereof.

(57) A process is described for the preparation of polymeric material containing randomly distributed hydroxyl groups. Problems arise when preparing such hydroxyl-containing material from polymers and copolymers of conjugated dienes, especially low molecular weight polymers and copolymers. The described process seeks to overcome these problems and comprises subjecting to imidation the half-ester of the adduct of maleic anhydride to a polymer or copolymer of a 1,3-conjugated diene, such as 1,3-butadiene and/or 2-methyl-1,3-butadiene. The imidation is effected with a primary amine of the formula $H_2N - A - (OH)_n$ where A is an organic radical containing 1 to 20 carbon atoms and $n$ is an integer of from 1 to 3. The adduct of maleic anhydride to the polymer or copolymer is prepared in conventional manner and subjected to half-esterification with an alcohol, such as a lower aliphatic alcohol. The half-ester is then subjected to imidation by adding the amine to the half-ester at elevated temperature and removing low-boiling products.

EP 0 087 526 A1

"POLYMERIC MATERIAL CONTAINING RANDOMLY DISTRIBUTED HYDROXYL GROUPS FROM POLYMERS AND COPOLYMERS OF CONJUGATED DIENES, PROCESS FOR THE PREPARATION THEREOF, AND USE THEREOF"

This invention relates to a process for the preparation of polymeric material containing randomly distributed pendant hydroxyl groups by chemical modification of polymers or copolymers of 1,3-conjugated dienes, to polymeric material produced by this process, and to the use of such polymeric material for reaction with a co-reactive multifunctional substance.

It is known that it is possible to prepare polymers and copolymers of 1,3-conjugated dienes (especially butadiene or isoprene) containing reactive functional groups, and then to react these functional groups with co-reactive multifunctional substances in order to produce a variety of useful compositions having diverse properties. The hydroxyl group is a typical reactive functional group and, for example, a hydroxyl-containing butadiene polymer may be reacted with a suitable diisocyanate, this being an example of one class of co-reactive multifunctional substances, in order to produce rubbers, sealants, adhesives, caulking materials, surface coating compositions, casting compositions, etc.

This art is of particular interest where the hydroxyl-containing diene polymer or copolymer is sufficiently low molecular weight to be liquid, since solid and products of the kind mentioned above may then be formed using liquid mixture in the absence of substantial quantities of organic solvents or diluents, with consequent advantages in ease of handling and with respect to raw material costs and environmental considerations. However, if the presence of inert organic solvents or diluents can be tolerated in the starting

materials, or if the conditions of use facilitate removal of the solvent or diluent from the end product by volatilisation or by other means, then there is no reason in principle why higher molecular weight polymers should not also be employed containing the said reactive functional groups.

It is possible to prepare copolymers of butadiene containing randomly distributed pendant hydroxyl groups by copolymerisation of mixtures containing butadiene and a hydroxy-monomer, such as a hydroxyalkyl acrylate or hydroxyalkyl methacrylate. In the present state of knowledge, such a copolymerisation is feasible utilising only a free radical polymerisation mechanism. Although random copolymers of high molecular weight can be prepared readily in aqueous emulsion by this mechanism, it is troublesome to avoid the formation of cross-linked and insoluble products at high values of conversion of monomers to copolymer. Further, the recovery of the polymer and its purification by the removal of water, unreacted monomers, by-products and of other extraneous components of the reaction mixture, the presence of which would impair the efficiency of the reaction between hydroxyl groups in the copolymer and a co-reactive substance, require troublesome and expensive measures. The same mechanism of polymerisation does not lend itself as readily to the preparation of low molecular weight copolymers of butadiene by polymerisation in aqueous emulsion, since large proportions of chain transfer agents are necessary for molecular weight control. Low molecular weight random copolymers can be prepared by polymerisation in organic solvents, but the removal of solvent and purification of the copolymer are again tedious operations.

It is also possible to utilise the free radical polymerisation mechanism to prepare polymers and copolymers

of dienes containing terminal hydroxyl groups, for example, by employing hydrogen peroxide as initiator, and by providing reaction conditions under which polymeric radicals terminate by mutual combination. Low molecular weight, i.e., liquid, polymers and copolymers of butadiene containing terminal hydroxyl groups are articles of commerce, having been prepared by polymerisation using substantial quantities of hydrogen peroxide in essentially a bulk or solution polymerisation process. This method of preparation suffers from other drawbacks and difficulties, notably the requirements of high temperature and high pressure during polymerisation and incomplete conversion to polymer, in addition to the need for a complicated recovery stage.

An anionic polymerisation mechanism has also been used to prepare butadiene polymers containing terminal hydroxyl groups, especially liquid polymers. This method avoids many of the difficulties of the free radical mechanism mentioned above, and offers the advantages of obtaining stricter difunctionality and a narrower molecular weight distribution. Other difficulties manifest themselves, however, notably the need to use specially,synthesised difunctional metal-organic initiators, and the tendency for the reaction mixture to set to a solid intractable mass upon the addition of alkylene oxide to "cap" the terminal polymeric carbanions, however low their molecular weight. Furthermore, since the molecular weight of the polymer is inversely proportional to the amount of initiator used, rather large quantities of expensive initiator are required in order to produce low molecular weight liquid polymers.

Reviews of this chemistry are to be found in the journal "Rubber Chemistry and Technology" 1969, Vol. 42, pp.71 et seq., author D. M. French; and in the book

"Polymer Chemistry of Synthetic Elastomers", published by Interscience Publishers in 1969, Part 2 Chapter 9.

In addition to the difficulties of molecular weight control, already touched upon, effective control of the microstructure of diene polymers or copolymers is highly dependent upon the reaction mechanism, i.e., whether free-radical, cationic or anionic. In the last case, the nature of the metallic cation and the polarity of the polymerisation environment also exert a critical effect on the microstructure. It is a very desirable facility to be able to retain freedom to select the microstructure as well as the molecular weight of the hydroxyl-containing diene polymer or copolymer in order to achieve optimum results in the end-use.

Although there may exist certain end-uses for polymers and copolymers of butadiene in which the presence of terminal functional groups, rather than of randomly-distributed pendant functional groups, is essential, nevertheless, in many end uses the availability of random functional groups for further reaction is perfectly satisfactory for the purposes of attainment of good physical properties.

It is an object of the invention to provide a process for the introduction of randomly located pendant hydroxyl groups into a wide variety of polymers and copolymers of 1,3-conjugated dienes especially butadiene and isoprene.

Accordingly, the present invention provides a process for the preparation of a polymeric material containing randomly distributed hydroxyl groups, wherein the half-ester of the adduct of maleic anhydride to a polymer or copolymer of a 1,3-conjugated diene is subjected to imidation with a primary amine of the general formula

$$H_2N - A - (OH)_n$$

where A is an organic radical containing from 1 to 20 carbon atoms and n is an integer of from 1 to 3.

The present invention is also a polymeric material prepared by the process just indicated and the use of the polymeric material for reaction with a co-reactive multifunctional substance, such as a diisocyanate.

The starting polymer or copolymer may have been prepared previously by any convenient and economic process chosen to result in a polymer or copolymer which processes the desired mean molecular weight, distribution of molecular weights, constituion and micro-structure, whereby the proportion of hydroxyl groups subsequently introduced is capable of wide variation according to the properties required in the end-use.

The reaction of a carboxylic acid anhydride with a primary amine to form a cyclic imide is well known and is referred to as "imidation" in this specification. This reaction proceeds readily to a good yield of imide, provided that other structures also reactive with primary amines are not also present (such as the unsaturated carbon-carbon bond in maleic anhydride itself which is susceptible to Michael addition). It is also known that if the primary amine also contains one or more hydroxyl groups, then, in the absence of other groups reactive with hydroxyl, hydroxy-substituted cyclic imides may be prepared in good yield.

If it is attempted to react a primary amino group in an amino-alcohol with the reaction product formed by adducting maleic anydride to the hydrocarbon chain of a polymer or copolymer of a 1,3-conjugated diene (termed a maleic adduct in this specification hereinafter, for convenience), in order to form a hydroxy-substituted cyclic imide of the polymer or copolymer, a frequent result is "gelation" (premature cross-linking into an

insoluble network structure). It is surmised that the amino groups and the hydroxyl groups exhibit similar reactivities towards the anhydride groups. Thus this teaching of classical organic chemistry would tend to failure if applied to an attempt to form pendant hydroxyl-containing diene polymers or copolymers.

It has been disclosed in British Patent Specification No. 1,540,101 that water-soluble compositions may be prepared by a sequence of reactions involving, inter alia, maleic adducts of polymers or copolymers of 1,3-dienes having a molecular weight of up to 30,000 with a primary-tertiary diamine. There may also be present optionally a primary amine containing alcohol groups; the reaction product should contain per 100g. from 0.05 to 0.5 mole of combined diamine and up to 0.2 mole of combined amino-alcohol (e.g. p.3 line 16 to p.4 line 21). Combination of primary amino groups should occur by formation of cyclic imide groups. From the Examples it is evident that where an amino alcohol is required to be present during reaction, it should be used in a minor molar proportion relative to the primary-tertiary diamine. In Example 10, for example, 1,000g. of the maleic adduct of a polybutadiene were reacted with 91.3g. dimethylaminoproplyamine (0.9 mole approximately) and 21.8g. monoethanolamine (0.36 mole approximately). From the proportion of maleic anhydride used (assuming complete adduction) and from the stated number average molecular weight of the polybutadiene, it can readily be calculated that on average a maximum of only about 0.8 molar equivalents of hydroxyl group would be introduced thereby into each mole of polybutadiene initially used. Such a proportion would not be sufficient for the preparation of useful compositions by reacting the hydroxyl-containing polymer with co-reactive multifunctional substances, and the

disclosure of that specification contains no such proposal.

The polymer or copolymer into which pendant hydroxyl groups are introduced by the present process is preferably derived from 1,3-butadiene and/or 2-methyl-1,3-butadiene (isoprene). Any known method may be used for the preparation of the polymer or copolymer. If it is normally solid, i.e., of relatively high mean molecular weight, greater than about 20,000, it should be substantially completely soluble in solvents which are inert during the reactions necessary to the present process, preferably in hydrocarbon solvents. As for liquid polybutadienes, any of the sources cited may be consulted for general methods of preparation, or the review by A.R. Luxton in "Rubber Chemistry and Technology", 1981, Vol. 54 pp.596 et seq. The mean molecular weight of the diene polymer or copolymer is preferably within the range 800 to 200,000, more preferably 1,000 to 50,000. If a copolymer is employed, any copolymerised units which are not hydrocarbon in nature should be inert during the reactions necessary to the process of the invention and by nature and proportion they should not hinder solution of the copolymer in inert solvents, should such a measure be necessary.

The conditions for the formation of the maleic adduct are conventional, and reference may be made to the last two sources cited for descriptions of typical procedures. The proportion of maleic anhydride to be adducted is selected in dependance upon the properties required of the composition in the end-use and on such considerations during the prior processing as viscosity, avoidance of gelation, speed of reaction etc. It may be assumed that virtually all the maleic anhydride used can be caused to adduct, and that virtually every maleic anhydride residue will subsequently result in imide formation. With this assumption, as a guide, and with knowledge of the mean molecular weight of the diene polymer or copolymer the amount of maleic anhydride used should preferably

correspond to a proportion within the range from about 1.5 to about 10 moles per mole of polymer or copolymer initially present. Greater or lesser proportions may be used, however, if called for by the end-use. For example, the broader the molecular weight distribution of the polymer or copolymer, the greater will be the proportion of maleic anhydride used in order to provide the required degree of reactivity with the co-reactive multifunctional substance. It must be kept in mind that the maleic adduct will always exhibit a greater viscosity than that of the original diene polymer or copolymer, which increase in viscosity will be more or less severe depending upon the molecular weight of the latter, the proportion of maleic anhydride adducted, etc.

After the maleic adduct has been formed, it is then half-esterified with one or more primary, secondary or tertiary monohydric alcohols containing up to 8 carbon atoms. The conditions for this reaction must be such as to ensure that all the anhydride residues are converted to half-ester groups. The procedures necessary are those known to organic chemistry requiring the use of a stoichiometric excess of alcohol if necessary, the application of heat, extension of the reaction time, use of an esterification catalyst such as a tertiary organic amine etc. Any alcohol may be selected which is sufficiently reactive and which contains up to about 8 carbon atoms, and the alcohol may be used alone or in admixture with one or more other such alcohols. It should be borne in mind that in the next step of the process, namely imidation, the alcohol is re-generated as one of the by-products, the other being water. These by-products together with any stoichiometric excess of alcohol must be removed afterwards from the reaction product, because they would also interact with the co-reactive multifunctional substance. Since it is highly convenient to remove the

by-products by evaporation, the alcohol or alcohols used for half-esterification of the maleic adduct should be reasonably volatile, and accordingly it is preferred to use simple aliphatic alcohols such as methanol, ethanol, the propanols and the butanols. Although methanol may be used successfully, some care is required during the imidation reaction and during subsequent removal of by-products by volatilisation, due to a tendency towards foaming.

In the next process step, in which the present invention resides, the half-ester of the maleic adduct is reacted with a stoichiometric proportion, or with a slight stoichiometric excess, of one or more primary organic amines which contain at least one hydroxyl group and the structure of which can be represented by the general formula $H_2N-(A)-(OH)_n$, wherein A is an organic radical such as a hydrocarbyl radical and contains from 1 to 20 carbon atoms and wherein the value of n is from 1 to 3. Examples of such substances are monoalkanolamines, such as monomethanolamine, monoethanolamine, the monopropanolamines and the monobutanolamines.

This reaction, which is imidation of the half-ester groups, is carried out by adding the amine at a temperature of from 100° to 150°C. and raising the temperature to about 150°C. in order to complete imidation. Typically, the addition is commenced at a reaction temperature of 110°C. which is gradually raised to 150°C. while distilling out the low boiling by-products. In any case the by-products are finally removed from the product of the reaction, preferably by evaporation under vacuum.

The invention will now be illustrated by the following Examples.

EXAMPLE 1

A mixture of 3120 g. of a liquid polybutadiene known as "Lithene PM", (obtainable from Revertex Chemicals Limited, "Lithene" is a registered Trade Mark) having a number average molecular weight of about 1300 g. $mole^{-1}$, a broad molecular weight distribution, a viscosity of 0.66 Pa.s. (25°C) and a microstructure of about 45% vinyl-1,2 34% trans-1,4 and 21% cis-1,4 configuration; 94g. xylene; 15.6 g of tris-nonylphenyl phosphite sold by Uniroyal Limited under the registered Trade Mark "Polygard"; and 468 g. maleic anhydride was charged to a reaction vessel. The mixture was heated with stirring and the temperature raised to 190°C. within about 1 hour while refluxing and maintaining an inert gas atmosphere. The reaction mixture was then heated for 5 hours more at 190°C. The batch was cooled to room temperature to give a pale yellow maleinised polybutadiene, being the maleic adduct of polybutadiene and having a viscosity of 14.5 Pa.s. (25°C.)

EXAMPLE 1A (not according to the invention)

100g. of the maleinised polybutadiene prepared in Example 1 were mixed at room temperature with 7.6 g. ethanolamine. The mixture became warm and rapidly gave a thick gel.

EXAMPLE 1B (not according to the invention)

100g. of the maleinised polybutadiene prepared in Example 1 were diluted at room temperature with 50g. xylene. 7.6g. ethanolamine were then stirred into the mixture. The mixture became warm and rapidly gave a thick gel.

EXAMPLE 1C (not according to the invention)

200g. of the maleinised polybutadiene prepared in Example 1 were diluted with 40g. of 2-*n*-butoxyethanol at room temperature and 15.3g. ethanolamine were then stirred into the mixture. The mixture became warm and

rapidly gave a thick gel.

EXAMPLE 1D (not according to the invention)

100g. of the maleinised polybutadiene prepared in Example 1 were mixed with 4.3g. methanol at room temperature. 7.6g. ethanol amine were then stirred into the reaction mixture. The mixture became warm and rapidly gave a thick gel.

EXAMPLE 1E

1,000g. of the maleinised polybutadiene prepared in Example 1 were mixed with 42.6g. methanol in a reaction vessel equipped with a stirrer, a reflux condenser and an inert gas atmosphere. The mixture was heated and the temperature raised to 80°C. over a period of about 0.5 hour and was then heated for three hours more at 80°C. thereby forming a half-ester of the adduct with methanol.

The mixture was then heated to 150°C. over a period of about 0.5 hour and 76.4g. of ethanolamine were added dropwise at 150°C. over about 0.5 hour. The addition of the amine caused a solvent reflux which caused the maximum reaction mixture temperature that could be obtained to fall to about 120-130°C. The apparatus was altered to permit distillation and the reaction mixture was heated in such a way that low boiling fractions were distilled out until a reaction temperature of 150°C. was again obtained. The reaction mixture was then heated for three hours more at 150°C. There were no signs of any gelation occurring throughout these operations.

The reaction mixture was cooled to a temperature of 100°C. and 120g. of toluene were added. Toluene, together with the water and methanol released by the imidation process, were distilled out of the reaction mixture under vacuum. A golden yellow, hydroxy-functionalised polybutadiene was obtained.

The hydroxy-polybutadiene had a viscosity of 130 Pa.s. (25$^{O}$C.), a hydroxy content of 1.25 milli-equivalents per gram, a residual toluene content of 0.33 wt % and a residual ethanolamine content of 0.08 wt %. The hydroxy functionalised nature of the polymer prepared in this Example was demonstrated by mixing 25g. of the polymer with 2.66g. toluene diisocyanate and 0.027g. 1,4-diazabicyclo(2.2.2)octane. The mixture was left at 50$^{O}$C. overnight after which time it had cured to give a golden yellow, hard, rubbery material having a slight residual surface tack.

In the above Examples, gelation occurred when the maleic anhydride residues in the maleic adduct were either completely unesterified (1A, 1B), or were insufficiently half-esterified (1C, 1D). When care was taken to ensure that half-esterification of all available anhydride groups occurred (1E), by attention to the reaction conditions and when using the same stoichiometric proportion of alcohol to anhydride groups (1/1 molar) as in 1D, then the subsequent imidation reaction was successful without the occurrence of gelation.

EXAMPLE 2

A mixture of 3.120g. of a liquid polybutadiene known as "Lithene N4-5,000" and having a number average molecular weight of about 5,000g. mole $^{-1}$, a narrow molecular weight distribution, a viscosity of 3.5 Pa.s. (25$^{O}$C) and a microstructure of about 16% vinyl-1,2, 52% trans-1,4 and 29% cis-1,4 configuration; 94g. xylene; 15.6g. "Polygard"; and 156g. maleic anhydride was charged to a reaction vessel. The mixture was heated with stirring to 190$^{O}$C. within about 1 hour while refluxing and maintaining an inert gas atmosphere. The reaction mixture was then heated for five hours more at 190$^{O}$C. The batch was allowed to cool to room temperature to give a pale yellow maleinised polybutadiene, being the

the maleic adduct of polybutadiene and having a viscosity of 7.3 Pa.s. (25°C).

EXAMPLE 2A (not according to the invention)

50g. of the maleinised polybutadiene prepared in Example 2 were mixed at room temperature with 1.48g. ethanolamine. The mixture rapidly became warm and gave a tough gel.

EXAMPLE 2B (not according to the invention)

50g. of the maleinised polybutadiene prepared in Example 2 were mixed with 1.82g. 3-amino-1-propanol. The mixture rapidly became warm and gave a tough gel.

EXAMPLE 2C (not according to the invention)

50g. of the maleinised polybutadiene prepared in Example 2 were mixed with 1.56g. methanol at room temperature. 1.48g. ethanolamine were then stirred into the reaction mixture. The mixture thickened considerably to give a nearly gelled product and consequently became very difficult to stir.

EXAMPLE 2D

100g. of the maleinised polybutadiene prepared in Example 2 were mixed with 3.11g. methanol in a reaction vessel equipped with a stirrer, a reflux condenser and an inert gas atmosphere. The reaction mixture was heated to 150°C. over a period of about 0.5 hour, thereby to half-esterify the adduct with the methanol.

2.96g. ethanolamine were added dropwise at 150°C. over about 0.5 hour. The reaction mixture was then heated at 150°C. for three hours. In this Example it was not necessary to distil out low boiling fractions in order to obtain a reaction temperature of 150°C., as was the case in Example 1E. There were not signs of any gelation occurring throughout these operations.

The reaction temperature was reduced to 100°C. and 10g. of toluene were added. Toluene, together with the water and methanol released by the imidation process,

were distilled out of the reaction mixture under vacuum. A golden yellow, hydroxy-functionalised polybutadiene was obtained.

The hydroxy-polybutadiene had a viscosity of 34 Pa.s. (25$^{o}$C), a hydroxy content of 0.47 milli-equivalents per gram, a residual toluene content of 0.24 wt % and a residual ethanolamine content of less than 0.01 wt %. The hydroxy-functionalised nature of the polymer prepared in this Example was demonstrated by mixing 25g. of the polymer with 1.03g. toluene diisocyanate and 0.0103g. 1,4-diazabicyclo(2.2.2)octane. The mixture was left at 50$^{o}$C. overnight after which time it had cured to give a golden yellow, soft, rubbery material free of surface tack.

In Example 2, the anhydride content of the maleic adduct was reduced compared with Example 1 (about 0.49 m.mole anhydride equivalents per g. adduct, compared with about 1.33). In Examples 2A and 2B esterification was not attempted and gelation occurred on reaction with the aminoalcohol. In Example 2C a one-molar excess of methanol was used but the conditions were evidently inadequate for half-esterification to take place, since gelation occurred. In Example 2D, 2 moles of methanol were again used per anhydride residue in the maleic adduct, and heat was applied to ensure half-esterification. Imidation took place subsequently without the occurrence of gelation.

EXAMPLE 3

A mixture of 1,500 g. of the same liquid polybutadiene known as "Lithene N4-5,000" as that used in Example 2; 75g. xylene; 7.5g. "Polygard"; and 129g. maleic anhydride was charged to a reaction vessel. The mixture was heated with stirring to 190$^{o}$C. within about 1 hour while refluxing and maintaining an inert gas atmosphere. The reaction mixture was then heated for

5 hours more at 190°C. The batch was allowed to cool to room temperature to give a pale yellow maleinised polybutadiene being, the maleic adduct of polybutadiene and having a viscosity of 20.5 Pa.s. (25°C).

EXAMPLE 3A (not according to the invention)

50g. of the maleinised polybutadiene of Example 3 were mixed at room temperature with 2.46g. ethanolamine. The mixture became warm and rapidly gave a thick gel.

EXAMPLE 3B (not according to the invention)

50g. of the maleinised polybutadiene of Example 3 were mixed with 2.59g. of methanol at room temperature. 2.46g. of ethanolamine were then stirred into the mixture. The reaction mixture became warm and rapidly gave a thick gel.

EXAMPLE 3C (not according to the invention)

200g. of the maleinised polybutadiene of Example 3 were mixed with 5.17g. of methanol in the reaction vessel equipped with a stirrer, reflux condenser and an inert gas atmosphere. The reaction mixture was heated to 150°C. over about 0.5 hour. 9.86g. of ethanolamine were added dropwise at 150°C. over about 0.5 hour. The reaction mixture gelled during the addition of the amine and became impossible to stir.

EXAMPLE 3D

856g. of the maleinised polybutadiene of Example 3 were mixed with 42.24g. of methanol in a reaction vessel equipped with a stirrer, reflux condenser and an inert gas atmosphere. The reaction mixture was heated for three hours at 80°C. and was then heated to 150°C. over about 0.5 hour. 42.26g. of ethanolamine were then added dropwise at 150°C. over about 0.5 hour. As was observed in Example 1E, the addition of amine gave a solvent reflux and low boiling fractions were distilled out in such a way as to obtain a reaction temperature at 150°C. The reaction mixture was then heated for

three hours at 150$^{\circ}$C. There were no signs of any gelation occurring throughout these operations.

The reaction mixture was cooled to 100$^{\circ}$C. and 85g. of toluene were added. Toluene, together with the water and methanol released by the imidation process, were distilled out of the reaction mixture under vacuum. A golden yellow, hydroxy-functionalised polybutadiene was obtained.

The hydroxy-polybutadiene had a viscosity of 117 Pa.s. (25$^{\circ}$C.), a hydroxy content of 0.6 milli-equivalents per gram, a residual toluene content of 0.41 wt % and a residual ethanolamine content of 0.08 wt %. The hydroxy functionalised nature of the polymer prepared in this Example was demonstrated by mixing 25g. of the polymer with 1.57g. toluene diisocyanate and 0.0157g. 1,4-diazabicyclo(2.2.2)octane. The mixture was left at 50$^{\circ}$C. overnight after which time it had cured to give a golden yellow, hard, rubbery material free of surface tack.

In these Examples, gelation occurred when the maleic adduct was reacted directly with ethanolamine (3A); and when the maleic adduct was first treated with 2 stoichiometric equivalents of methanol in an attempt to effect half-esterification at room temperature (3B) before addition of ethanolamine; and when the maleic adduct was first heated with a stoichiometric equivalent of methanol for 0.5 hour at 150$^{\circ}$C. (3C).

When care was taken to ensure half-esterification was complete before imidation (3D), by reaction with 2 stoichiometric equivalents of methanol for 3 hours at 80$^{\circ}$C. and 0.5 hour at 150$^{\circ}$C., no gelation occurred.

In Experiments 1E and 2D the analytical result indicated a value of hydroxyl content after imidation very nearly the same as the theoretical value assuming complete adduction of all the maleic anhydride used and

complete imidation of the anhydride groups. In Experiment 3D the analytical value was about 75% of the theoretically derived value.

EXAMPLE 4

A mixture of 3,120g. of the same liquid polybutadiene known as "Lithene" N4-5,000 as that used in Example 2; 156g. xylene; 1,57g. diphenyl-p-phenylenediamine sold by Vulnax International Limited under the registered Trade Mark "Permanax DPPD"; and 269g. of maleic anhydride were charged to a reaction vessel. The mixture was heated with stirring to 190°C. within about 1 hour while refluxing and maintaing an inert gas atmosphere. The reaction mixture was then heated for a period of 5 hours at 190°C. The batch was allowed to cool to room temperature to give a pale browm maleinised polybutadiene, being the maleic adduct of polybutadiene and having a viscosity of 11.9 Pa.s. (25°C).

176g. of methanol were added to the maleinised polymer batch at 60 to 80°C. and the mixture was then heated for 2 hours at 70 to 80°C. using the same apparatus as for the maleinisation stage. The mixture was then heated to 100°C. over about 10 minutes and 167g. of ethanolamine were added dropwise at 100°C. over about 0.5 hour. The reaction mixture was then heated to 150°C., over about 2 hours. As was observed in Example 1E, the addition of amine caused a solvent reflux and low boiling fractions were distilled out so as to obtain a reaction temperature of 150°C. The reaction mixture was then heated for three hours at 150°C. Throughout these operations there were no signs of any gelation occurring.

The reaction mixture was cooled to 100°C. and 312g. of toluene were added. Toluene, together with the water and methanol released by the imidation process, were distilled out of the reaction mixture under vacuum.

A brown, hydroxy-functionalised polybutadiene was obtained.

The hydroxy-polybutadiene had a viscosity of 50 Pa.s. (25°C0, a hydroxy content of 0.6 milliequivalents per gram, a residual toluene content of 0.2 wt % and a residual ethanolamine content of about 0.01 wt %. The hydroxy-functionalised nature of the polymer prepared in this Example was demonstrated by mixing 25g. of the polymer with 1.41g. toluene diisocyanate and 0.0141g. 1,4-diazabicyclo(2.2.2)octane. The mixture was left at 50°C. overnight after which time it had cured to give a rubbery material free of surface tack.

EXAMPLE 5

350g. of maleinised polymer, prepared as described in Example 4, and 24g. of n-butanol were charged to a reaction vessel equipped with a stirrer, reflux condenser and an inert gas atmosphere. The reaction mixture was heated to 100-110°C., over about 15 minutes and then heated in the 100-110°C. temperature range for a further two hours. 16.52g. of the ethanolamine were then added dropwise at 110°C. over a period of about 0.5 hour. The reaction mixture was heated to 120°C. over a period of about 0.5 hour and was then heated in the temperature range 120 to 130°C. for two hours. As in Example 1E, low boiling fractions were distilled out of the reaction mixture in such a way as to obtain a reaction temperature of 150°C. The reaction mixture was heated fro three hours at 150°C. There were no signs of any gelation occurring throughout these operations. Furthermore, frothing of the reaction mixture after the amine addition and during the subsequent heating was found to be less troublesome with this Example than for other example, such as Example 4, which employed methanol as the sterifying alcohol and which were heated more rapidly to 150°C.

The reaction mixture was cooled to 100°C. and 35g. of toluene were added. Toluene, together with the water and n-butanol released by the imidation process, were distilled out of the reaction mixture under vacuum. The hydroxy-functionalised polybutadiene obtained had a viscosity of 59 Pa.s. (25°C). The hydroxy-functionalised nature of the polymer prepared in this Example was demonstrated by mixing 25g. of the polymer with 1.41g. of toluene diisocyanate and 0.0141g. 1,4-diazabicyclo(2.2.2)-octane. The mixture was left at 50°C. for four hours after which time it had cured to give a rubbery material free of surface tak and similar to that obtained by the toluene diisocyanate cure of the polymer prepared in Example 4.

EXAMPLE 6

350g. of maleinised polymer, prepared as described in Example 4, and 24g. of n-butanol were charged to a reaction vessel equipped with a stirrer, reflux condenser and an inert gas atmosphere. The reaction mixture was heated to 100 to 110°C. over a period of about 15 minutes and then heated in the 100 to 110°C. temperature range for a further two hours. 20.3g. of 3-amino-1-propanol were added dropwise at 110°C. over about 0.5 hour. The reaction mixture was heated to 120°C. and was then heated in the temperature range 120 to 130°C. for a period of two hours. As in Example 1E, low boiling fractions were distilled out of the reaction mixture in such a way as to obtain a reaction temperature of 150°C. The reaction mixture was heated for three hours at 150°C. As in Example 5, problems associated with forthing of the reaction mixture were minimised. There were no signs of any gelation occurring throughout these operations.

The reaction mixture was cooled to 100°C. and 35g. of toluene were added. Toluene, together with the water and n-butanol released by the imidation process were

distilled out of the reaction mixture under vacuum. The hydroxy-functionalised polybutadiene obtained had a viscosity of 48 Pa.s. (25°C). The hydroxy-functionalised nature of the polymer prepared in this Example was demonstrated by mixing 25g. of the polymer with 1.41g. of toluene diisocyanate and 0.0141g. of 1,4-diazabicyclo(2.2.2.)-octane. The mixture was left at 50°C. for four hours after which time it had cured to give a rubbery material free of surface tack and similar to the cured materials obtained from the polymers prepared in Examples 5 and 6.

EXAMPLE 7

A liquid polybutadiene known as "Lithene" LX16 and having a number average molecular weight of about 8,000g. $mole^{-1}$, a narrow molecular weight distribution, a viscosity of 10.4 Pa.s. (25°C) and a microstructure of about 14% vinyl-1,2, 57% trans-1,4 and 27% cis-1,4 configuration was reacted with 10 wt % maleic anhydride (based on the total adduct weight) in the manner described in Example 4, to give a maleinised polymer having a viscosity of 37 Pa.s. (25°C).

EXAMPLE 7A (not according to the invention)

200g. of the maleinised polymer were reacted with 6.53g. of methanol for 1 hour at 60 to 80°C. in a reaction vessel equipped with a stirrer, reflux condenser and an inert gas atmosphere. The reaction temperature was increased to 100°C. over about 15 minutes and 12.5g. of ethanolamine were added dropwise over 0.5 hour. The reaction mixture gelled during the addition of the amine.

EXAMPLE 7B

600g. of maleinised "Lithene" LX16 prepared as described in Example 7, and 35.6g. of methanol were heated for three hours at 60 to 80°C., in a reaction vessel equipppped with a stirrer, reflux condenser and an inert gas atmosphere. The reaction temperature was increased to 100°C. over about 15 minutes and 37.4g. of

ethanolamine were added dropwise over a period of about 0.5 hour. The reaction mixture was then heated to 140 to 150°C. over a period of about 1 hour. As in Example 5, low boiling fractions were distilled out so that a reaction temperature of 150°C. could be obtained. The reaction mixture was then heated for 3 hours at 150°C. There were no signs of any gelation occurring throughout these operations. The reaction mixture was cooled to 100°C. and 60g. of toluene were added. Toluene, together with the water and methanol released by the imidation process, were distilled out of the reaction mixture under vacuum.

An hydroxy-functionalised polybutadiene was obtained having a viscosity of 189 Pa.s. (25°C), a hydroxy content of 0.73 milliequivalents per gram, a residual toluene content of 0.65 wt % and a residual ethanolamine content of about 0.01 wt %. The hydroxy-functionalised nature of the polymer prepared in this Example was demonstrated by mixing 25g. of the polymer with 1.58g. toluene diisocyanate and 0.0158g. 1,4-diazabicyclo-(2.2.2.)octane. The mixture was left at 50°C. overnight after which time it had cured to give a hard rubbery material free of any surface tack.

CLAIMS:

1. A process for the preparation of a polymeric material containing randomly distributed hydroxyl groups, wherein the half-ester of the adduct of maleic anhydride to a polymer- or copolymer of a 1,3-conjugated diene is subjected to imidation with a primary amine of the general formala:

$$H_2N - A - (OH)_n$$

where A is an organic radical containing from 1 to 20 carbon atoms and n is an integer of from 1 to 3.

2. A process as claimed in Claim 1, wherein the polymer or copolymer is derived from 1,3-butadiene and/or 2-methyl-1,3-butadiene.

3. A process as claimed in Claim 1 to 2, wherein the polymer or copolymer has a molecular weight of from 800 to 200,000, preferably 1,000 to 50,000.

4. A process as claimed in any one of Claims 1 to 3, wherein the primary amine is a monoalkanolamine selected from monomethanolamine, monoethanolamine, the monopropanolamines and the monobutanolamines.

5. A process as claimed in any one of Claims 1 to 4, wherein the half-esterification is effected with an aliphatic alcohol selected from methanol, ethanol, the propanols and the butanols.

6. A process as claimed in any one of Claims 1 to 5, wherein the imidation is carried out by adding the amine to said half-ester at a temperature of from 100 to 150°C. and removing low boiling products.

7. A process as claimed in any one of Claims 1 to 6, wherein said adduct has been prepared by reacting maleic anhydride with said polymer or copolymer in a proportion of from 1.5 to 10 moles per mole of polymer or copolymer.

8. A polymeric material based on a polymer or copolymer of a conjugated diene and containing randomly

distributed hydroxyl groups prepared by the process claimed in any one of Claims 1 to 7.

9. The use of the polymeric material claimed in Claim 8 for reaction with a co-reactive multifunctional substance.

10. The use claimed in Claim 9, wherein the co-reactive multifunctional substance is a diisocyanate.

European Patent Office

# EUROPEAN SEARCH REPORT

0087526
Application number

EP 82 30 0985

## DOCUMENTS CONSIDERED TO BE RELEVANT

| Category | Citation of document with indication where appropriate, of relevant passages | Relevant to claim | CLASSIFICATION OF THE APPLICATION (Int. Cl. 3) |
|---|---|---|---|
| | --- | | |
| X | FR-A-2 355 866 (DR. KURT HERBERTS) *Page 24, lines 1-15; page 5, lines 22-28; page 8, lines 13-25; page 8, line 27 to page 9, line 3; page 9, lines 5-6* | 1-10 | C 08 C 19/36<br>C 08 C 19/28 |
| | --- | | |
| X | FR-A-2 307 854 (NIPPON OIL) *Pages 4-5; page 6, lines 21-37* & GB - A - 1 540 101 (Cat. D) | 1-8 | |
| | ----- | | |
| | | | TECHNICAL FIELDS SEARCHED (Int. Cl. 3) |
| | | | C 08 C |

The present search report has been drawn up for all claims

| Place of search | Date of completion of the search | Examiner |
|---|---|---|
| THE HAGUE | 02-11-1982 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document